# EUROPÄISCHE PATENTSCHRIFT

(11) **EP 0 558 995 B1**
(45) Veröffentlichungstag und Bekanntmachung des Hinweises auf die Patenterteilung: **11.10.1995**
(21) Anmeldenummer: 93102430.1
(22) Anmeldetag: 17.02.1993
(51) Int. Cl.: F16H 35/14, B60H 1/00, B62D 25/12, G05G 5/06

(54) **Arretierungsmechanismus**
Locking mechanism
Mécanisme d'arrêt

(30) Priorität: 03.03.1992 DE 4206629
(43) Veröffentlichungstag der Anmeldung: 08.09.1993
(73) Patentinhaber: Adam Opel Aktiengesellschaft, 65428 Rüsselsheim (DE)
(72) Erfinder: Heck, Thomas, W-6500 Mainz 21 (DE)
(74) Vertreter: Bergerin, Ralf, Dipl.-Ing.

(56) Entgegenhaltungen:
- DE-A- 3 904 570
- FR-A- 2 407 114
- US-A- 4 651 583
- US-A- 4 653 689
- PATENT ABSTRACTS OF JAPAN vol. 11, no. 1 (M-550)(2448) 6. Januar 1987 & JP-A-61 181 717 (NIPPON DENSO) 14. August 1986

## Beschreibung

Die Erfindung betrifft einen Arretierungsmechanismus, bestehend aus einem Führungshebelarm und einem Gleithebelarm, wobei die einen Enden der Hebelarme beabstandet zueinander um jeweils ein Lager schwenkbar sind und das andere Ende des Gleithebelarms über einen mit ihm verbundenen Zapfen mit einem Langloch im anderen Ende des Führungshebelarms gleitfähig gekoppelt ist und die Hebelarme in zwei Endpositionen geschwenkt werden können.

Aus der US-A 4 651 583 ist ein Arretierungsmechanismus nach dem Oberbegriff des Anspruchs 1 bekannt. Die arretierende Wirkung kommt dabei durch die Funktion einer Feder zustande, die sich zum einen am feststehenden Lager des Führungshebelarms abstützt und zum anderen den Zapfen des Gleithebelarms in die jeweilige Endposition gedrückt hält. Ein Verschwenken des Arretierungsmechanismus nach dem Stand der Technik erfolgt in der Weise, daß die Feder zusammengedrückt wird und der Zapfen in dem Langloch gleitet, bis die beiden Hebelarme durch Verschwenken in die andere Endposition gelangen und die Federwirkung aktiviert wird und somit die Endposition sichert.

Bei einem derartigen Arretierungsmechanismus muß beim Verschwenken aus einer Endposition in die andere ständig Kraft gegen die Federwirkung aufgebracht werden muß. Außerdem stellt die Feder ein zusätzliches den Bauaufwand vergrößerndes Bauteil dar.

Der vorliegenden Erfindung liegt die Aufgabe zugrunde, einen Arretierungsmechanismus nach dem Oberbegriff des Anspruchs 1 derart weiterzubilden, daß eine Arretierwirkung ohne zusätzliche Bauteile ermöglicht wird und eine Entlastung der Betätigungskraft beim Verschwenken von einer Endposition in die andere Endposition erreicht wird.

Diese Aufgabe wird erfindungsgemäß dadurch gelöst, daß der Arretierungsmechanismus der oben genannten Art die im Kennzeichenteil des Patentanspruchs 1 angegebenen Merkmale aufweist.

Der Arretierungsmechanismus hat den wesentlichen Vorteil, daß keine zusätzlichen Bauteile zum Sperren benötigt werden, sondern nur eine Bearbeitung des Langloches erforderlich ist und eine große selbsthemmende Kraft erzielt wird, die größer als vergleichbare Federkräfte nach dem Stand der Technik sein kann. Es wird dabei lediglich die Reaktionskraft des Gleithebelarms ausgenutzt, der sich an seinem Lager abstützt gegen eine von außen ausgeübte Kraft auf den Führungshebelarm.

Die Ausgestaltung des Langloches sieht dabei vor, daß eine Ausnehmung im Bereich eines Endes des Führungshebelarms eine kreisbogenförmige Fläche mit einem sektoralen Ausschnittswinkel größer 180 Grad hat und einen Durchmesser aufweist, der nur geringfügig größer als die Breite des Langloches selbst ist. Der Führungshebelarm ist mit einer entgegen der jeweiligen Endposition gerichteten Kraft durch eine mit dem Führungshebelarm gekoppelte mechanische Anordnung beaufschlagbar, wird aber von dieser Kraft nicht in eine jeweilige andere Endposition gebracht, sondern verharrt selbsthemmend in seiner momentanen Position. Zur Aufhebung der Arretierungswirkung wird eine Kraft über ein Bedienelement und eine mechanische Konstruktion, die am Gleithebelarm angreift, auf diesen übertragen. In einer bevorzugten Ausführungsform ist die mechanische Konstruktion ein Bowdenzug, der am Zapfen des Gleithebelarms angebracht ist, und als Bedienelement dient ein Schieberstellglied. Die mit dem Führungshebelarm gekoppelte mechanische Anordnung ist in einem bevorzugten Ausführungsbeispiel eine Klappe einer Gebläseeinrichtung eines Kraftfahrzeuges zum wahlweisen Verstellen des Betriebsmodus auf Frischluft- oder Umluftbetrieb als den zwei entsprechenden Endpositionen des Arretierungsmechanismus. In einem anderen Ausführungsbeispiel ist die gekoppelte mechanische Anordnung die Motorhaube mit dem Offen- bzw. Schließzustand als den zwei entsprechenden Endpositionen. In einem dritten Ausführungsbeispiel ist die mit dem Führungshebelarm gekoppelte mechanische Anordnung das Schiebedach mit einer Aufstellposition und dem Offen- bzw. Schließzustand als den zwei entsprechenden Endpositionen.

Weitere vorteilhafte Ausgestaltungen der Erfindung ergeben sich aus den Unteransprüchen.

Beispiele der Erfindung sind in den Figuren dargestellt. Es zeigen:
- Fig. 1: die Prinzipwirkung des Arretiermechanismus,

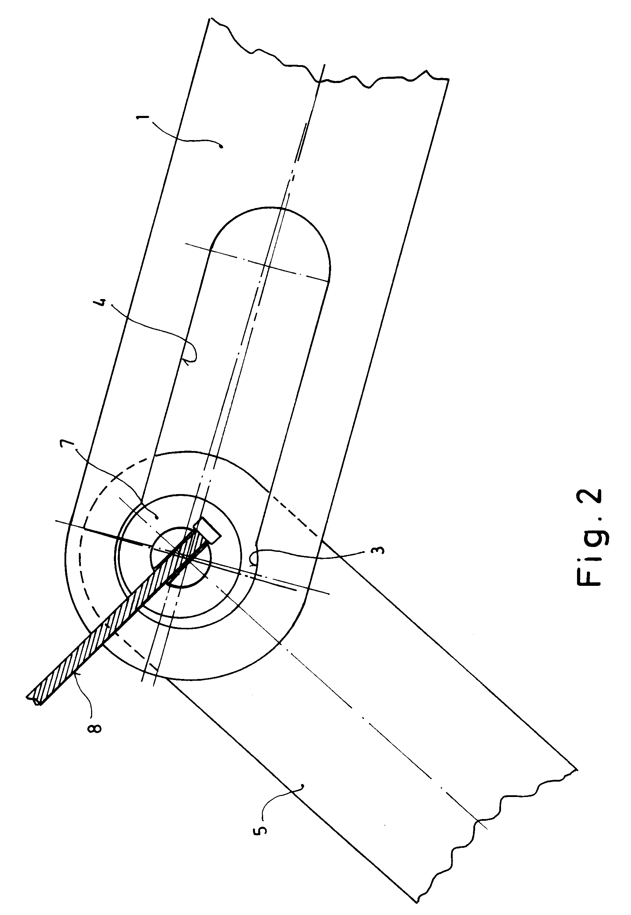

- Fig. 2: einen vergrößerten Ausschnitt aus Figur 1,
- Fig. 3: eine Anwendung des Arretiermechanismus auf die Stellung der Klappen einer Gebläseeinrichtung eines Kraftfahrzeuges,
- Fig. 4: die vektoralen Kraftverhältnisse in prinzipieller Wirkungsweise des erfindungsgemäßen Arretiermechanismus.

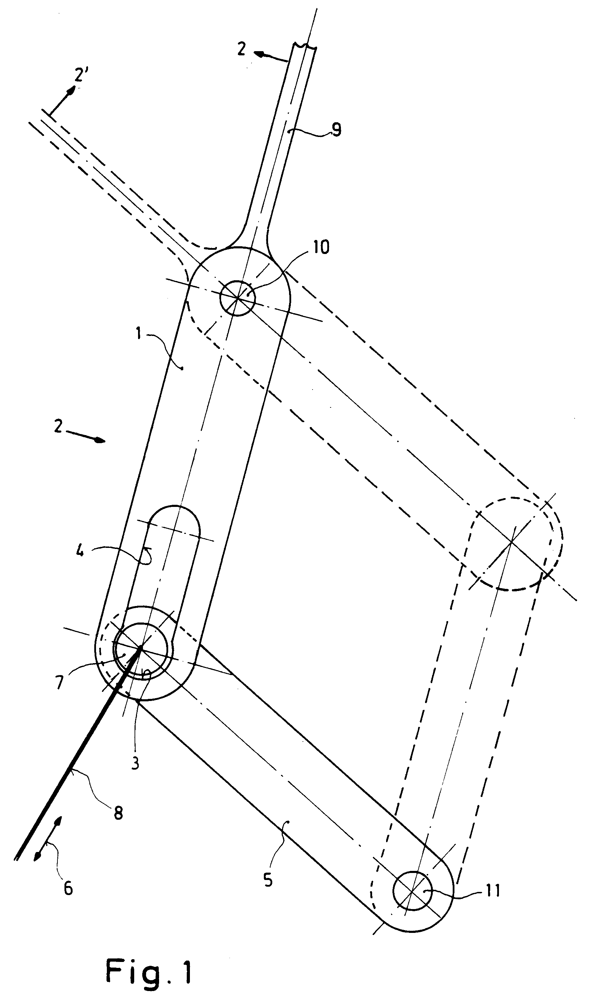

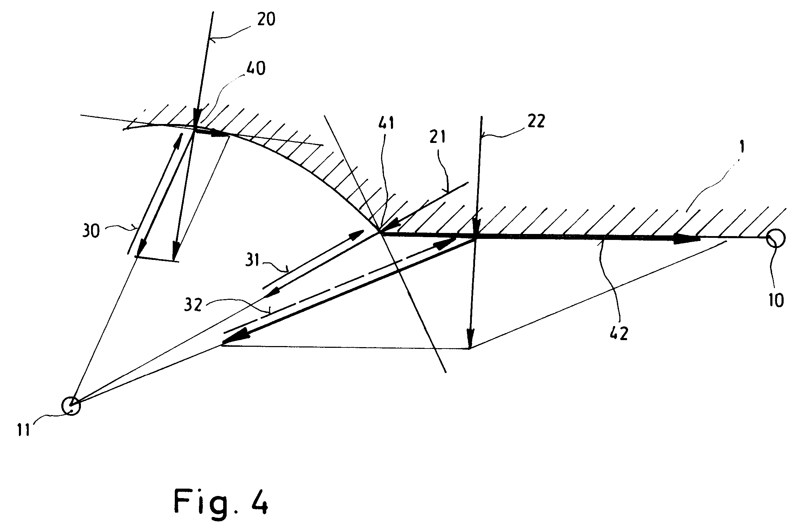

Der in Figur 1 dargestellte Arretierungsmechanismus besteht aus dem Führungshebelarm 1 und dem Gleithebelarm 5, wobei die einen Enden der Hebelarme beabstandet zueinander um jeweils ein Lager 10 bzw. 11 schwenkbar sind, und das andere Ende des Gleithebelarms 5 über einen mit ihm verbundenen Zapfen 7 mit einem Langloch 4 im anderen Ende des Führungshebelarms 1 gleitfähig gekoppelt ist und wobei die Hebelarme in zwei Endpositionen geschwenkt werden können. Mit dem Führungshebelarm 1 ist mechanisch beispielsweise eine Klappe 9 gekoppelt, auf die unter bestimmten Bedingungen eine Kraft ausgeübt wird, die den Führungshebelarm 1 in die jeweilig andere Endposition zu verschwenken sucht. Dieser Kraft 2 zur Verschwenkung aus einer Endposition in die andere wird dadurch entgegengewirkt, daß eine Ausnehmung 3 im Bereich des anderen Endes des Führungshebelarms 1 in dem Langloch 4 vorgesehen wird, die diese Kraft selbstsperrend kompensiert, und die Arretierung kann nur durch eine auf den Gleithebelarm 5 ausgeübte Kraft 6 in Richtung der anderen Endposition aufgehoben werden. Die Ausnehmung 3 ist gekennzeichnet durch eine kreisbogenförmige Fläche mit einem sektoralen Ausschnittswinkel größer 180 Grad, und sie hat einen Durchmesser, der nur geringfügig größer als die Breite des Langloches 4 ist. Dadurch geht die Ausnehmung 3 in die Langlochnut 4 über. Die auf den Gleithebelarm 5 ausgeübte Kraft 6 greift mittels eines Bowdenzuges 8 am Zapfen 7 an. Dadurch läßt sich der Arretierungsmechanismus von einer Endposition zur anderen bewegen, wobei in jeder der Endpositionen Kräfte 2 beispielsweise auf die Klappe 9 ausgeübt werden. Da die Ausnehmung 3 symmetrisch zur Achse des Langloches 4 verläuft, hat sie ihre Wirkung in jeder der beiden Endpositionen. Der Durchmesser des Zapfens 7 entspricht in etwa der Breite des Langloches 4 und kann in dieser analog einer schiefen Ebene gleiten. Die prinzipielle Wirkung der Selbsthemmung soll anhand der Figur 4 erläutert werden. Dort ist mit 1 wieder der Führungshebelarm schematisch skizziert, der um das Lager 10 schwenkt, und der Gleithebelarm 5 ist nur bezüglich der Reaktionskraft als vektorielles Symbol dargestellt, der vom Lager 11 ausgehend wirkt. Mit 20 ist eine Kraft bezeichnet, die beispielsweise von der Klappe 9 der Figur 1 herrühren kann. Dieser Kraft wirkt die Reaktionskraft 30 entgegen, die vom Lager 11 aufgebracht wird und in einem Kräfteparallelogramm zerlegt wird in eine Tangentialkomponente und eine Komponente, die auf das Lager 11 wirkt. Diese Komponente wird kompensiert durch die Kraft 30, während die Tangentialkomponente 40 den Gleithebelarm nach rechts verschieben wird. Dabei wird diese Tangentialkomponente 40 zusehends kleiner bis sie die Größe 0 erreicht. In diesem Fall stehen sich Aktionskraft 21 und Reaktionskraft 31 gleichwertig gegenüber und kompensieren sich. Wird die Kraft 21 durch Druck auf den Führungshebelarm 1 erhöht, so erhöht sich auch die Reaktionskraft 31. Da die Tangentialkomponente 41 0 ist, bewegt sich der Gleithebelarm 5 nicht von der Stelle. Er verharrt in seinem Zustand. Erst wenn der Zapfen 7 aus dem Bereich der Ausnehmung 3 gleitet, was nur möglich ist, wenn am Zapfen 7 über den Bowdenzug 8 oder ähnliche mechanische Gebilde eine Kraft in Richtung der anderen Endposition ausgeübt wird, kann der Gleithebelarm 5 entlang der Gleitflächen des Langloches 4 gleiten bzw. eine Kraft, die dann auf den Führungshebelarm 1 ausgeübt wird, verschiebt den Zapfen 7 des Gleithebelarms 5 in Richtung der anderen Endposition. Dies ist mit dem Kräfteparallelogramm der Kräfte 22, 32 und 42 dargestellt, wodurch gezeigt wird, daß bei dem Betrag nach gleichbleibender Kraft 22 eine wesentlich größere Tangentialkomponente 42 erzielt wird.

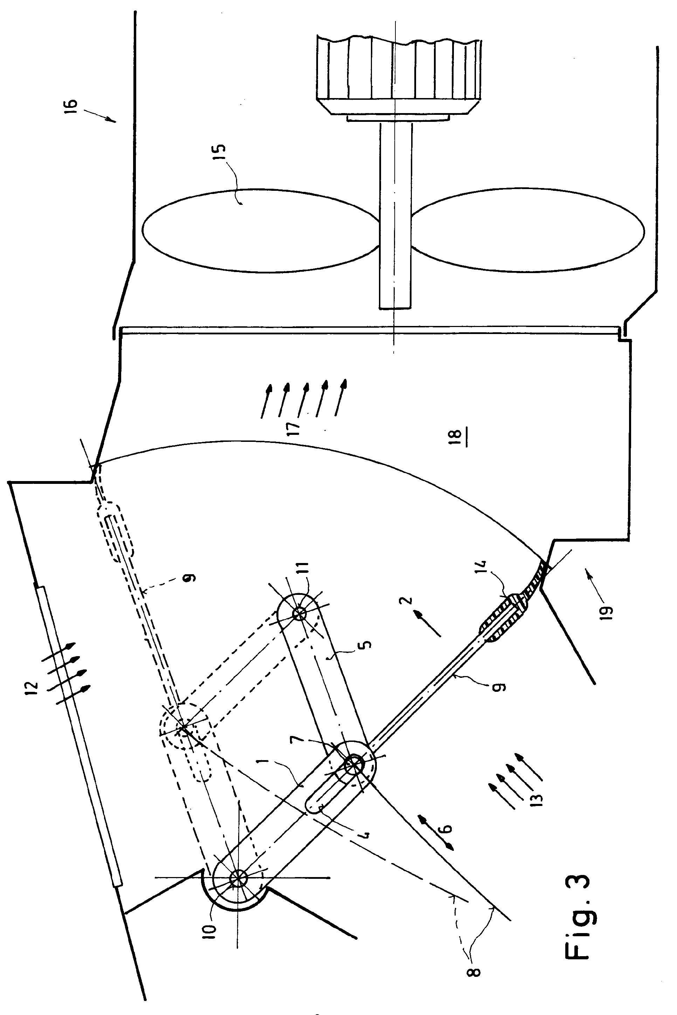

Den praktischen Anwendungsfall zeigt die Figur 3. Dort ist wieder mit 1 der Führungshebelarm mit dem Langloch 4 und der Ausnehmung 3 dargestellt, in der der Zapfen 7 des Gleithebelarms 5 gleitet. Die eine Endposition ist dabei gestrichelt dargestellt. In der aktuellen Endposition ist mit dem Führungshebelarm eine Klappe 9 gekoppelt, an deren Ende eine Gummilippe 14 angebracht ist, durch die ein eventueller Spielausgleich erfolgen soll. Die Gummilippe 14 dichtet zu einem Gehäuse 19 ab, in dem sich beispielsweise ein Gebläse 16 eines Kraftfahrzeuges mit einem Gebläserad 15 befindet. Im gezeigten Beispiel saugt das Gebläse Luft 17 durch die Frischluftöffnung 12 an, wodurch vor dem Gebläserad 15 ein Unterdruckraum 18 entsteht. Dieser Unterdruck übt eine Kraft 2 auf die Klappe 9 aus und versucht, die Klappe 9 aus dieser Endposition herauszubewegen, was zur Folge hätte, daß auch Umluft vom Gebläse angesaugt werden würde. Dem wirkt die selbsthemmende Wirkung des Arretierungsmechanismus entgegen, denn durch die Koppelung der Klappe 9 mit dem Führungshebelarm 1 entstehen Kraftverhältnisse in der Ausnehmung wie in den Erläuterungen zur Figur 4 bereits ausgeführt wurde. Ein Bewegen der Klappe in die Stellung Umluftbetrieb ist nur möglich, wenn über den Bowdenzug 8 eine Kraft 6 auf den Gleithebelarm 5 ausgeübt wird, vorzugsweise indem der Bowdenzug 8 am Zapfen 7 angebracht ist, um so die selbsthemmende Wirkung des Arretiermechanismus aufzuheben. Ist in der anderen Endposition beispielsweise die Frischluftzufuhr 12 verschlossen und wird Umluft 13 angesaugt, gelten entsprechend die gleichen Bedingungen.

## Patentansprüche

1. Arretierungsmechanismus bestehend aus einem Führungshebelarm (1) und einem Gleithebelarm (5), wobei die einen Enden der Hebelarme beabstandet zueinander um jeweils ein Lager (10, 11) schwenkbar sind und das andere Ende des Gleithebelarms (5) über einen mit ihm verbundenen Zapfen (7) mit einem Langloch (4) im anderen Ende des Führungshebelarms (1) gleitfähig gekoppelt ist und die Hebelarme in zwei Endpositionen geschwenkt werden können,
dadurch gekennzeichnet,
daß das in dem Führungshebelarm (1) vorgesehene Langloch (4) an dem dem zugehörigen Lager (10) abgewandten Ende in eine Ausnehmung (3) mit dreisbogenförmiger Fläche und mit einem sektoralen Ausschnittswinkel größer 180 Grad übergeht und einen Durchmesser hat, der nur geringfügig größer als die Breite des Langloches (4) ist, so daß eine in einer der Endpositionen auf den Führungshebelarm (1) ausgeübte Kraft (2) zur Schwenkung des Führungshebelarms (1) in die andere Endposition durch diese Ausnehmung (3) im Bereich des anderen Endes des Führungshebelarms (1) in dem Langloch (4) selbstsperrend kompensiert wird, und
daß Mittel (8) zur Erzeugung von auf den Gleithebelarm (5) wirkenden Kräften (6) vorgesehen sind, durch die die Arretierung des Gleithebelarms (5) aufgehoben werden kann.

2. Arretierungsmechanismus nach Anspruch 1 dadurch gekennzeichnet, daß der Führungshebelarm (1) mit einer entgegen der jeweiligen Endposition gerichteten Kraft (2) beaufschlagbar ist, die durch eine mit dem Führungshebelarm (1) gekoppelte mechanische Anordnung (9,14) auf diesen ausgeübt wird.

3. Arretierungsmechanismus nach einem der vorangehenden Ansprüche, dadurch gekennzeichnet, daß zur Aufhebung der Arretierungswirkung eine Kraft (6) über ein Bedienelement und eine mechanische Konstruktion (8), die am Gleithebelarm (5) angreift, auf diesen eingeleitet wird.

4. Arretierungsmechanismus nach Anspruch 3, dadurch gekennzeichnet, daß die mechanische Konstruktion ein Bowdenzug (8) ist, der am Zapfen (7) des Gleithebelarms (5) angebracht ist und das Bedienelement ein Schieberstellglied ist.

5. Arretierungsmechanismus nach einem der vorangehenden Ansprüche, dadurch gekennzeichnet, daß die mit dem Führungshebelarm gekoppelte mechanische Anordnung eine Klappe (9) der Gebläseeinrichtung (16) eines Kraftfahrzeugs ist zum wahlweisen Verstellen des Betriebsmodus auf Frischluft- oder Umluftbetrieb als den zwei entsprechenden Endpositionen.

6. Arretierungsmechanismus nach einem der vorangehenden Ansprüche, dadurch gekennzeichnet, daß die mit dem Führungshebelarm (1) gekoppelte mechanische Anordnung die Motorhaube ist mit dem Offen- bzw. Schließzustand als den zwei entsprechenden Endpositionen.

7. Arretierungsmechanismus nach einem der vorangehenden Ansprüche, dadurch gekennzeichnet, daß die mit dem Führungshebelarm (1) gekoppelte mechanische Anordnung das Schiebedach mit Aufstellposition und dem Offen- bzw. Schließzustand als den zwei entsprechenden Endpositionen ist.

## Claims

1. Locking mechanism consisting of a guide lever arm (1) and a slide lever arm (5), in which one end of the spaced apart lever arms is pivotable in each case about a bearing (10, 11) respectively and the other end of the slide lever arm (5), linked to the same by a pin (7), is slidingly coupled to an elongated hole (4) in the other end of the guide lever arm (1) and the lever arms can be pivoted in two end positions, characterised in that the end of the elongated hole (4) provided in the guide lever arm (1) facing away from the associated bearing (10) changes into a recess (3) with circular arc-shaped area and with a sectorial cut-out angle greater than 180 degrees and which has a diameter which is only slightly greater than the width of the elongated hole (4), so that a force (2) acting on the guide lever arm (1) in one of the end positions for pivoting the guide lever arm (1) into the other end position through this recess (3) is compensated in a self-locking manner in the region of the other end of the guide lever arm (1), and that means (8) are provided for generating forces (6) acting on the slide lever arm (5) through which the locking of the slide lever arm (5) can be lifted.

2. Locking mechanism according to claim 1, **characterised** in that the guide lever arm (1) is subjected to force (2), directed counter to the respective end position, which through a mechanical arrangement (9, 14), linked to the guide lever arm (1), acts on the same.

3. Locking mechanism according to one of the preceding claims, **characterised** in that for lifting the locking effect a force (6) is directed on the slide lever arm (5) via an operating element and a mechanical construction (8) which engages the slide lever arm (5).

4. Locking mechanism according to claim 3, **characterised** in that the mechanical construction is a Bowden cable (8) which is attached to the pin (7) of the slide lever arm (5) and the operating element is a sliding adjusting member.

5. Locking mechanism according to one of the preceding claims, **characterised** in that the mechanical arrangement linked to the guide lever arm is a valve (8) of the fan arrangement (16) of a motor vehicle for selectively adjusting the operating mode to fresh air or circulating air as the two corresponding end positions.

6. Locking mechanism according to one of the preceding claims, **characterised** in that the mechanical arrangement linked to the guide lever arm (1) is the engine hood with the open or closed condition as the two corresponding end positions.

7. Locking mechanism according to one of the preceding claims, **characterised** in that the mechanical arrangement linked to the guide lever arm (1) is the sliding roof in mounted position and the open or closed condition as the two corresponding end positions.

## Revendications

1. Mécanisme d'arrêt comprenant un levier (1) de guidage et un levier (5) coulissant, les leviers étant montés pivotants chacun autour d'un palier (10, 11) par l'une de leurs extrémités, à distance l'un de l'autre, et l'autre extrémité du levier (5) coulissant étant couplée avec possibilité de coulissement, par l'intermédiaire d'un axe (7) solidaire dudit levier, à un trou oblong (4) prévu dans l'autre extrémité du levier (1) de guidage et les deux leviers pouvant être amenés par pivotement dans deux positions extrêmes, caractérisé par le fait que le trou oblong (4) prévu dans le levier (1) de guidage, à l'extrémité de celui-ci éloignée du palier (10) associé, se raccorde à un évidement (3) en arc de cercle qui s'étend sur un angle supérieur à 180 degrés et présente un diamètre qui n'est que faiblement supérieur à la largeur du trou oblong (4), de telle sorte que, dans l'une des positions extrêmes, une force (2) exercée sur le levier (1) de guidage visant à amener par pivotement ledit levier (1) de guidage dans l'autre position extrême soit compensée par effet d'auto-blocage par ledit évidement (3) aménagé dans le trou oblong (4), dans la région de l'autre extrémité du levier (1) de guidage, et par le fait qu'il est prévu des moyens (8) pour générer des forces (6) qui agissent sur le levier (5) coulissant et permettent de vaincre le blocage du levier (5) coulissant.

2. Mécanisme d'arrêt selon la revendication 1, caractérisé par le fait que le levier de guidage (1) est sollicité par une force (2) qui agit dans la direction opposée à la position extrême concernée, laquelle force est exercée par un dispositif mécanique (9, 14) couplé au levier (1) de guidage.

3. Mécanisme d'arrêt selon l'une des revendication précédentes, caractérisé par le fait que, pour annuler l'effet de blocage, on introduit dans le levier (5) coulissant, par l'intermédiaire d'un organe de commande et d'un ensemble mécanique (8), une force (6) qui agit sur le levier (5) coulissant.

4. Mécanisme d'arrêt selon la revendication 3, caractérisé par le fait que l'ensemble mécanique est un câble de Bowden (8) qui est monté sur l'axe (7) du levier (5) coulissant et que l'organe de commande est un élément à coulisse.

5. Mécanisme d'arrêt selon l'une des revendications précédentes, caractérisé par le fait que le dispositif mécanique couplé au levier de guidage est un volet (9) du dispositif de ventilation (16) d'un véhicule, lequel permet de passer au choix du mode "admission d'air frais" au mode "recyclage" en tant que deux positions extrêmes.

6. Mécanisme d'arrêt selon l'une des revendications précédentes, caractérisé par le fait que le dispositif mécanique couplé au levier de guidage (1) est le capot moteur, avec pour positions extrêmes l'état ouvert et l'état fermé.

7. Mécanisme d'arrêt selon l'une des revendications précédentes, caractérisé par le fait que le dispositif mécanique couplé au levier de guidage (1) est le toit coulissant avec une position soulevée et pour positions extrêmes l'état ouvert et l'état fermé.
